# EUROPEAN PATENT APPLICATION

(11) **EP 4 843 885 A1**
(43) Date of publication of application: **25.11.2026**
(21) Application number: 26157929.6
(22) Date of filing: 11.02.2026
(51) Int. Cl.: B64C 1/18, B64D 11/02

(54) **BARRIER FOR AN INTERNAL CABIN OF AN AIRCRAFT**

(30) Priority: 19.05.2025 US 202519211523
(71) Applicant: The Boeing Company, Arlington, VA 22202 (US)
(72) Inventor: SIEGMETH, Jeff S., ARLINGTON, 22202 (US); KRAKO, Christopher Matthew, ARLINGTON, 22202 (US); SCHAUB, Jeffrey Scott, ARLINGTON, 22202 (US); DAVIS, Sean Nelson Lee, ARLINGTON, 22202 (US)
(74) Representative: Plasseraud IP

(57) **Abstract**

A system (120) is configured to provide an interface between a main floor (128) of an internal cabin (122) of and a lavatory (100) secured to the main floor (128). The system (120) includes a barrier (124) including a base (150) having a first surface (152) and a second surface (154) opposite from the first surface (152). A passage (164) is formed through the base (150) between and through the first surface (152) and the second surface (154). A lip (170) extends from the second surface (154). The lip (170) is configured to couple to edges of the main floor (128) that define a first opening (126, 130) formed in the main floor (128). A liquid blocker extends from the first surface (152) around the passage (164). The liquid blocker is configured to extend into a second opening (126, 130) formed in a base floor (101, 132) of the lavatory (100).

## Description

### FIELD OF THE DISCLOSURE

Examples of the present disclosure generally relate to barriers (for example, barrier seals) for an internal cabin of an aircraft, which are particularly well-suited for providing a fluid-tight barrier in relation to a junction box of a lavatory within the internal cabin.

### BACKGROUND OF THE DISCLOSURE

Commercial aircraft are used to transport passengers between various locations. A typical commercial aircraft includes one or more lavatories within an internal cabin.

During a manufacturing process of a commercial aircraft, various monuments are installed within an internal cabin. A lavatory is a monument that is moved into the internal cabin and installed at a particular position within the internal cabin. The lavatory is secured to a floor of the internal cabin through fittings, fasteners, adhesives, and/or the like. For example, a base of the lavatory can be secured on panels of the floor of the internal cabin, and can be further secured to seat tracks or hard points disposed in the floor.

At least a portion of the lavatory can be disposed over an electrical bay below the floor of the internal cabin. As can be appreciated, the electrical bay is protected from water intrusion from above by an impermeable floor, drip trays, and other redundant structure. Systems floor penetrations underneath a lavatory can potentially provide a direct flow path for water despite junction boxes and other structure above the systems floor penetrations. It has been found that if water becomes present in a passenger aisle adjacent to a lavatory, the water could potentially track horizontally in a gap between the floor and the lavatory and potentially reach systems floor penetrations. While not considered a safety hazard due to existing protections and redundancies, systems floor penetrations can potentially provide a fluid path to the electrical bay.

In order to prevent water from infiltrating into such a potential fluid path, known methods include applying sealant around a perimeter of a lavatory. However, the sealant may not effectively bond to the floor, particularly if the floor includes carpet. Moreover, if the lavatory is removed for rework within the internal cabin, replacement sealant may not be applied as effectively as with original manufacture.

### SUMMARY OF THE DISCLOSURE

A need exists for a system and a method for effectively and efficiently providing a seal between a lavatory and a floor of an internal cabin of an aircraft. Further, a need exists for an interface between the floor and the lavatory at openings therebetween.

With those needs in mind, certain example of the present disclosure provide a system configured to provide an interface between a main floor of an internal cabin of and a lavatory secured to the main floor. Such system is provided in the appended claims. The system includes a barrier including a base having a first surface and a second surface opposite from the first surface. A passage is formed through the base between and through the first surface and the second surface. A lip extends from the second surface. The lip is configured to couple to edges of the main floor that define a first opening formed in the main floor. A liquid blocker extends from the first surface around the passage. The liquid blocker is configured to extend into a second opening formed in a base floor of the lavatory.

In at least one example, the first opening is configured to be aligned with the second opening. One or more fluid conduits of the lavatory are configured to extend into and through the first opening and the second opening. The second opening can be under a junction box within a cabinet of the lavatory.

In at least one example, the barrier is integrally molded and formed as a single piece of flexible, sealing material. As an example, the flexible, sealing material includes silicone.

In at least one example, the liquid blocker includes a bead. As a further example, the bead includes a root upwardly and inwardly extending from the base, and a stem connected to the root. The stem is arcuate, and upwardly and inwardly extends to an exposed edge.

In at least one example, the liquid blocker contiguously extends from and around a perimeter edge of the passage.

The base can include an expanded area between the passage and one side of the base.

In at least one example, one or more portions of the base of the barrier are configured to be sandwiched between the base floor of the lavatory and the main floor of the internal cabin.

In at least one example, the liquid blocker includes a deflectable rim having slits. Hinges (for example, integral living hinges) are formed between the slits.

Certain examples of the present disclosure provide an aircraft including an internal cabin having a main floor. A first opening is formed through the main floor. A lavatory having a base floor is secured to the main floor. A second opening is formed through the base floor. A system, as described herein, provides an interface between the main floor of the internal cabin and the lavatory secured to the main floor.

Certain examples of the present disclosure provide a method including coupling the lip to edges of the main floor that define the first opening formed in the main floor; and extending the liquid blocker into the second opening formed in the base floor of the lavatory. Such method is provided in the appended claims.

### BRIEF DESCRIPTION OF THE DRAWINGS

Figure 1 illustrates a perspective front view of an aircraft, according to an example of the present disclosure.
Figure 2 illustrates a perspective internal view of a lavatory, according to an example of the present disclosure.
Figure 3 illustrates an isometric internal view of a system for preventing liquid infiltration within an internal cabin of a vehicle, according to an example of the present disclosure.
Figure 4 illustrates an isometric top view of a barrier, according to an example of the present disclosure.
Figure 5 illustrates an isometric bottom view of the barrier of Figure 4.
Figure 6 illustrates an end view of the barrier of Figure 4.
Figure 7 illustrates a lateral view of the barrier of Figure 4.
Figure 8 illustrates an isometric top view the system of Figure 3.
Figure 9 illustrates a top view of the system of Figure 8.
Figure 10 illustrates an end view of the system through line 10-10 of Figure 8.
Figure 11 illustrates an isometric top view of a barrier, according to an example of the present disclosure.
Figure 12 illustrates an isometric bottom view of the barrier of Figure 11.
Figure 13 illustrates an end view of the barrier of Figure 11.
Figure 14 illustrates a lateral view of the barrier of Figure 11.
Figure 15 illustrates a flow chart of a method, according to an example of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

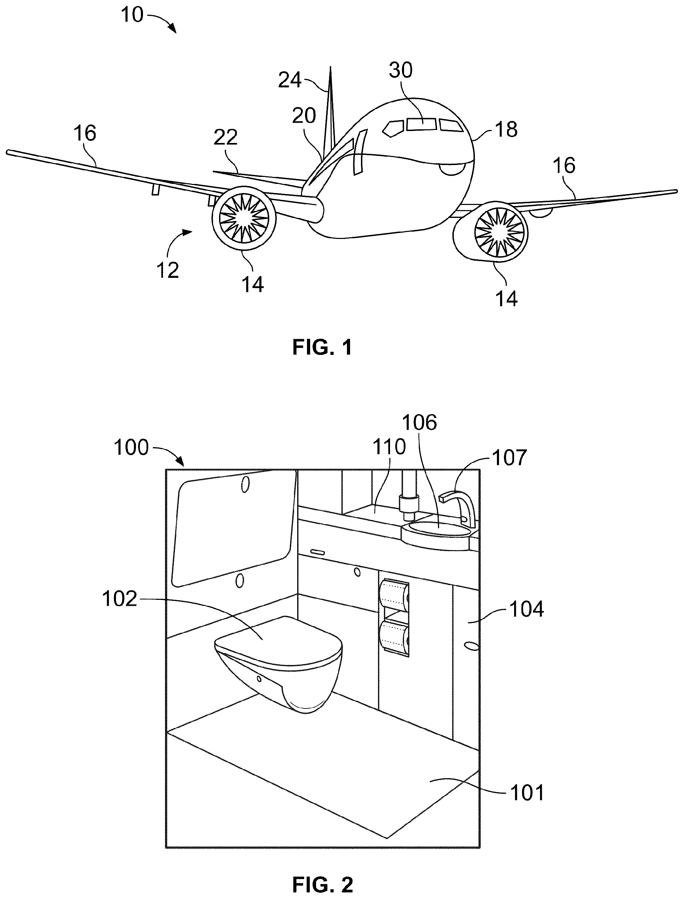

Figure 1 illustrates a perspective front view of an aircraft 10, according to an example of the present disclosure. The aircraft 10 includes a propulsion system 12 that includes engines 14, for example. Optionally, the propulsion system 12 may include more engines 14 than shown. The engines 14 are carried by wings 16 of the aircraft 10. In other examples, the engines 14 may be carried by a fuselage 18 and/or an empennage 20. The empennage 20 may also support horizontal stabilizers 22 and a vertical stabilizer 24.

The fuselage 18 of the aircraft 10 defines an internal cabin 30, which includes a flight deck or cockpit, one or more work sections (for example, galleys, personnel carry-on baggage areas, and the like), one or more passenger sections (for example, first class, business class, and coach sections), one or more lavatories, and/or the like. Optionally, instead of an aircraft, examples of the present disclosure may be used with various other vehicles, such as automobiles, buses, locomotives and train cars, watercraft, and the like. Further, examples of the present disclosure may be used with respect to fixed structures, such as commercial and residential buildings.

Figure 2 illustrates a perspective internal view of a lavatory 100, according to an example of the present disclosure. In at least one example, the lavatory 100 is onboard an aircraft, as described above. Optionally, the lavatory 100 may be onboard various other vehicles. In other examples, the lavatory 100 may be within a fixed structure, such as a commercial or residential building.

The lavatory 100 includes a base floor 101 that supports a toilet 102, cabinets 104, and a sink 106 or wash basin. A faucet 107 is configured to flow water into the sink 106. The faucet 107 is in fluid communication with a water supply, such as through one or more conduits, pipes, tubes, and/or the like. The sink 106 is disposed on and/or within a countertop 110, which is disposed on or otherwise over a cabinet 104. The lavatory 100 may be arranged differently than shown. The lavatory 100 may include more or fewer components than shown.

In at least one example, the lavatory 100 is a monument, which is installed within an internal cabin of a vehicle, such as the aircraft 10 of Figure 1. For example, the lavatory 100 is moved into a particular position within the internal cabin, and secured onto a floor of the internal cabin. An underside of the base floor 101 is secured to an upper surface of one or more panels of the main floor by one or more fittings, fasteners, adhesives, and/or the like. For example, the base floor 101 can be secured to seat tracks secured to the panels of the main floor.

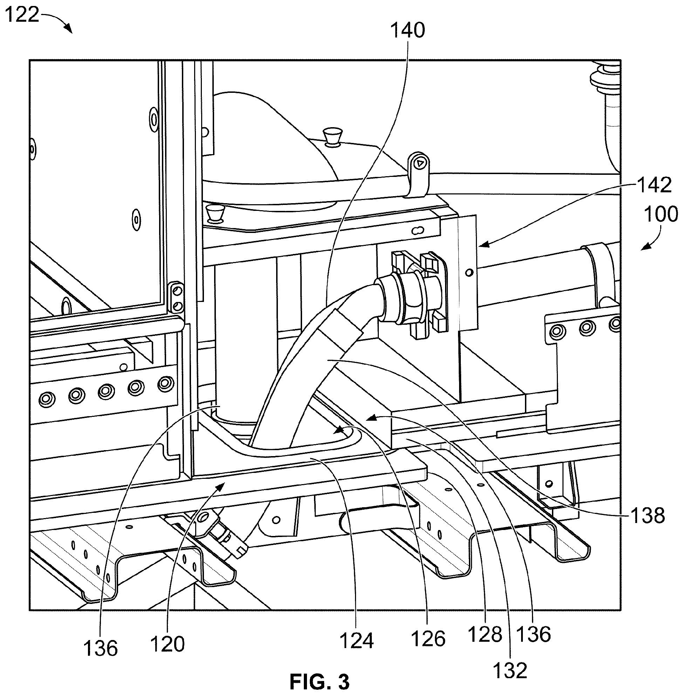

Figure 3 illustrates an isometric internal view of a system 120 for preventing liquid infiltration within an internal cabin 122 of a vehicle, such as the commercial aircraft 10 (shown in Figure 1), according to an example of the present disclosure. The system 120 includes a barrier 124 disposed within an opening 126 within a main floor 128 of the internal cabin 122 and an opening 130 formed within a base floor 132 of the lavatory 100. The opening 126 is aligned with the opening 130. The aligned openings 126 and 130 provide a path for one or more fluid conduits 136, 138, and 140 to pass from a junction box 142 of the lavatory through and below the main floor 128 of the internal cabin 122.

Referring to Figures 2 and 3, in at least one example, the junction box 142 is within a cabinet 104 of the lavatory 100. The junction box 142 is disposed below the sink 106. The fluid conduit 136 can be a vacuum line that connects the toilet 102 to a vacuum generator and a waste tank. The fluid conduit 138 can be a pressurized water line that connects a water supply to the faucet 107. The fluid conduit 140 can be a low pressure drain line that connects a drain of the sink to a gray water storage tank, for example. More, fewer, and/or different fluid conduits can pass through the aligned openings 126 and 130. The fluid conduits 136, 138, and 140 are merely examples.

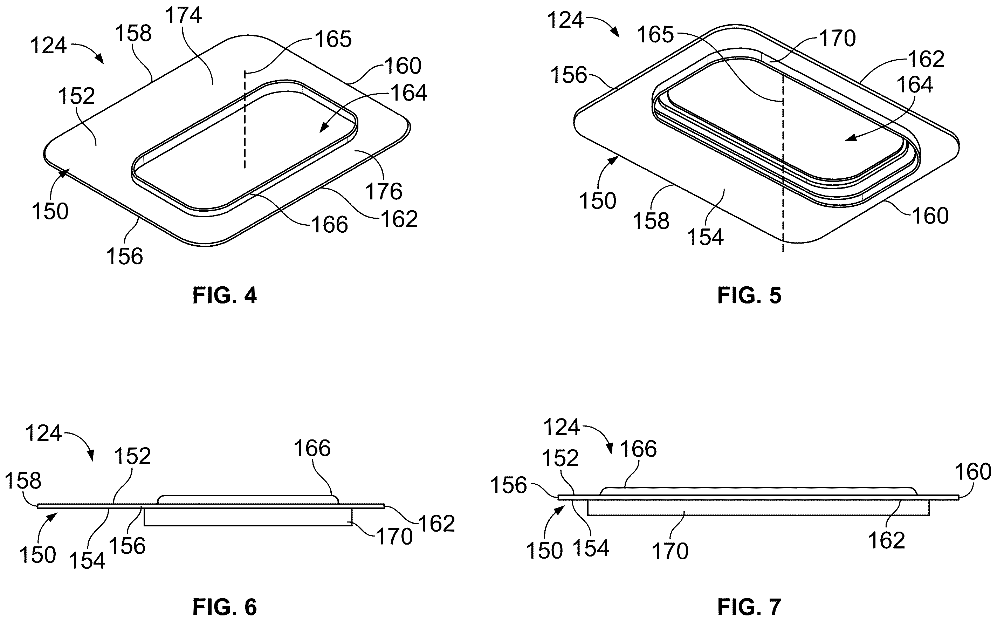

Figure 4 illustrates an isometric top view of the barrier 124, according to an example of the present disclosure. Figure 5 illustrates an isometric bottom view of the barrier 124 of Figure 4. Figure 6 illustrates an end view of the barrier 124 of Figure 4. Figure 7 illustrates a lateral view of the barrier 124 of Figure 4. Referring to Figures 4-7, in at least one example, the barrier 124 is integrally formed as a single piece of flexible, sealing material. For example, the barrier 124 can be integrally molded and formed as a single piece of material including silicone, rubber, or the like. Optionally, the barrier 124 can be co-molded with other stiffer materials, such as plastic, at one or more locations.

The barrier 124 includes a base 150, which is a flat sheet, panel, or the like. The base 150 includes a first surface 152 (such as an upper surface) opposite from a second surface 154 (such as a lower surface). The first surface 152 and the second surface 154 extend between a first end 156, a first side 158, a second end 160 opposite from the first end 156, and a second side 162 opposite from the first side 158. As shown, the base 150 can be generally rectangular, and can have rounded corners. Optionally, the base 150 can be sized and shaped circular, triangular, or any other desired size and shape.

A passage 164 is formed through the base 150, and extends from and through the first surface 152 and the second surface 154. The passage 164 provides an opening or channel through the base 150.

A liquid blocker, such as a bead 166, extends upwardly from the first surface 152 around the passage 164. In at least one example, the bead 166 is a contiguous, flexible member that contiguously extends upwardly from and around a perimeter edge of the passage 164. The contiguous, flexible rim-like nature of the bead 166 provides a sealing dam around the passage 164. Optionally, the bead 166 can include one or more cuts, slits, gaps, or the like, such that bead 166 is not contiguous.

A lip 170 extends downwardly from the second surface 154 around the passage 164. The lip 170 extends in a direction away from the bead 166. Similarly, the bead 166 extends in an opposite direction away from the lip 170. In at least one example, the lip 170 is a contiguous, flexible wall that extends downwardly from and the perimeter edge of the passage 164. The contiguous, flexible wall of the lip 170 provides an interface (such as a close-out), and protective covering for exposed edges of the main floor 128 which define the opening 126 (shown in Figure 3). For example, when the opening is cut into the main floor 128, honeycomb edges can be exposed. The exposed honeycomb edges can be relatively sharp, and can potentially contact the fluid conduits. The lip 170 covers the otherwise exposed edges, thereby providing a cover treatment that protects the fluid conduits from any potential damage from the edges, which define the opening 126. Optionally, the lip 170 can include one or more cuts, slits, gaps, or the like, such that the lip 170 is not contiguous.

As shown, the base 150 can have an expanded area 174 between the passage 164 and the first side 158. The expanded area 174 is larger than an area 176 between the passage 164 and the second side 162. The expanded area 174 allows for the barrier 124 to be used with openings within the main floor 128 and the base floor 132 of varying shapes and sizes. For example, the opening 126 of the main floor 128 can be smaller or larger than the opening 130 of the base floor 132 of the lavatory 100 (shown in Figure 3). The expanded area 174 allows use of the barrier 124 with different sized and shaped openings. Optionally, the passage 164 can be coaxial with a central axis of the barrier 124 such that distance between the passage 164 and each of the first end 156, the first side 158, the second end 160, and the second side 162 is uniform.

As described herein, the system 120 provides an interface between the main floor 128 of an internal cabin 122 (such as of the aircraft 10, shown in Figure 1), and the lavatory 100 secured to the main floor 128. The system 120 includes the barrier 124, which includes the base 150 having the first surface 152 and the second surface 154 opposite from the first surface 152. The passage 164 is formed through the base 150 between and through the first surface 152 and the second surface 154. The lip 170 outwardly extends from the second surface 154. The lip 170 is configured to couple to edges of the main floor 128 that define the opening 126 formed in the main floor 128. A liquid blocker (such as the bead 166, a rim, an upstanding wall, or the like) extends from the first surface 152 around the passage 164. The liquid blocker is configured to extend into the opening 130 formed in the base floor 132 of the lavatory 100.

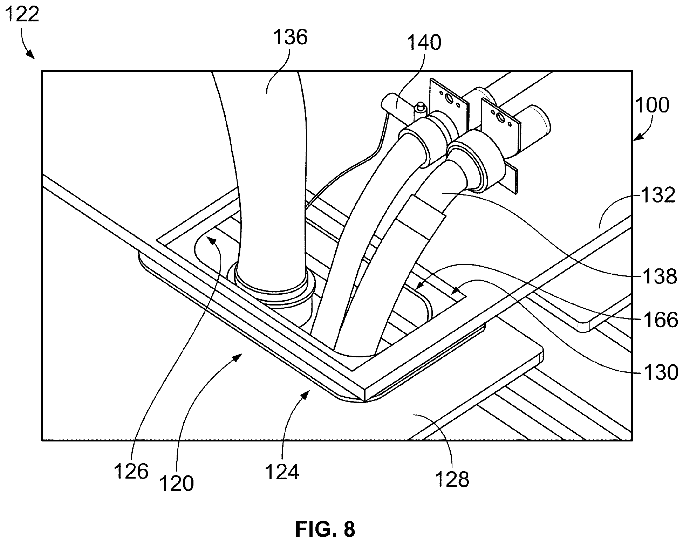

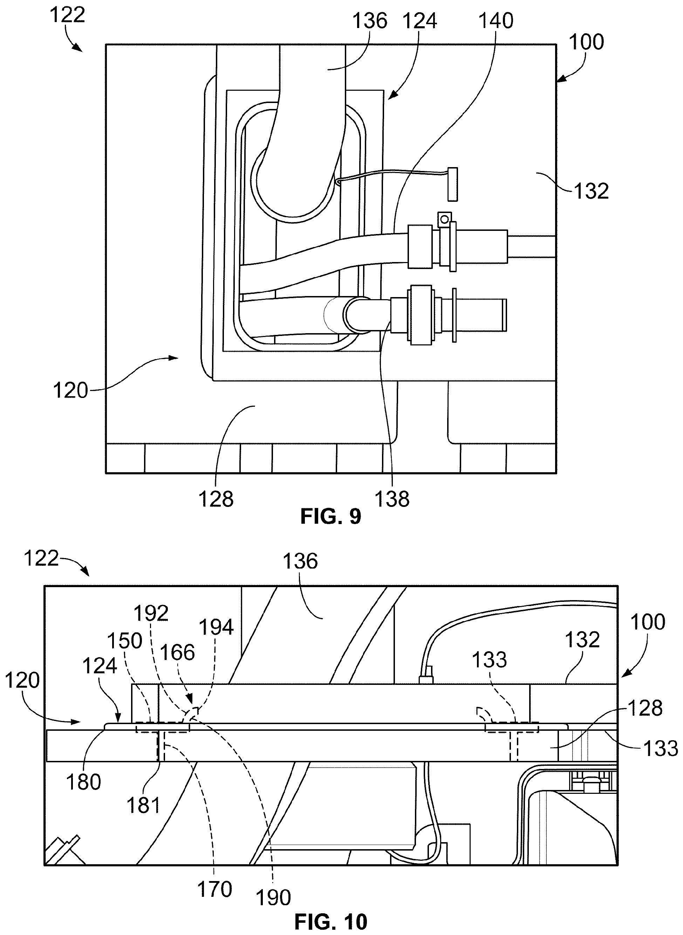

Figure 8 illustrates an isometric top view the system 120 of Figure 3. Figure 9 illustrates a top view of the system 120 of Figure 8. Figure 10 illustrates an end view of the system 120 through line 10-10 of Figure 8. For the sake of clarity, the junction box 142 (shown in Figure 3) is not shown in Figures 8-10.

Referring to Figures 3-10, one or more portions (or optionally, an entirety) of the base 150 of barrier 124 are sandwiched between an underside of the base floor 132 of the lavatory 100 and the main floor 128 of the internal cabin 122. A gap 133 can exist between the base floor 132 and the main floor 128. The passage 164 is disposed within the opening 126 of the main floor 128 and the opening 130 of the base floor 132. In at least one example, the base 150 includes a recess formed therein to allow any incidental moisture a drain path. The recess can be oriented in a desired direction, such as toward an outboard edge of a main passenger floor, where it can continue draining along an inside wall of a fuselage.

As shown in Figure 10, in particular, the lip 170 can be orthogonal to the base 150. The base 150 overlays a top surface 180 of the main floor 128 surrounding the opening 126, and the lip 170 covers internal edges 181 of the main floor 128 that define the opening 126. In this manner, the lip 170 provides a protective barrier between the internal edges 181 and the fluid conduits 136, 138, and 140, thereby preventing potential damage between the internal edges 181 and the fluid conduits 136, 138, and 140.

The base 150 is sandwiched between the top surface 180 of the main floor 128 surrounding the opening 126, and a bottom surface 133 of the base floor 132 surrounding the opening 130. In at least one example, the base 150 is bonded to the main floor 128 and the base floor 132, such as via one or more adhesives.

The bead 166 includes a root 190 upwardly and inwardly extending from the base 150. The root 190 connects to a stem 192, which is arcuate, and upwardly and inwardly extends to an exposed edge 194. In this manner, the bead 166 provides a flexible member, which inwardly extends toward a central axis 165 of the passage 164. The bead 166 provides a sealing dam that prevents liquid from infiltrating into the passage 164. Further, the base 150 and the lip 170 prevent water from infiltrating between the base floor 132 and the main floor 128. In at least one example, the root 190 and/or stem 192 can include a reduced cross-sectional thickness at one or more areas to act as a living hinge to facilitate flexibility during installation.

The flexible nature of the bead 166 allows the bead 166 to deflect to accommodate installation of the lavatory 100 within the internal cabin 122. For example, as the lavatory 100 is moved into position, the base floor 132 of the lavatory 100 may slide over the bead 166 as the openings 126 and 130 are being aligned. The bead 166, being formed of a resilient and flexible material, such as including silicone or rubber, downwardly deflects as the base floor 132 slides thereon. When the base floor 132 is no longer on the bead 166, the bead 166 deflects upwardly back to an at-rest position, as shown in Figure 10, which provides a dam, which prevents water from passing into the openings 126 and 130.

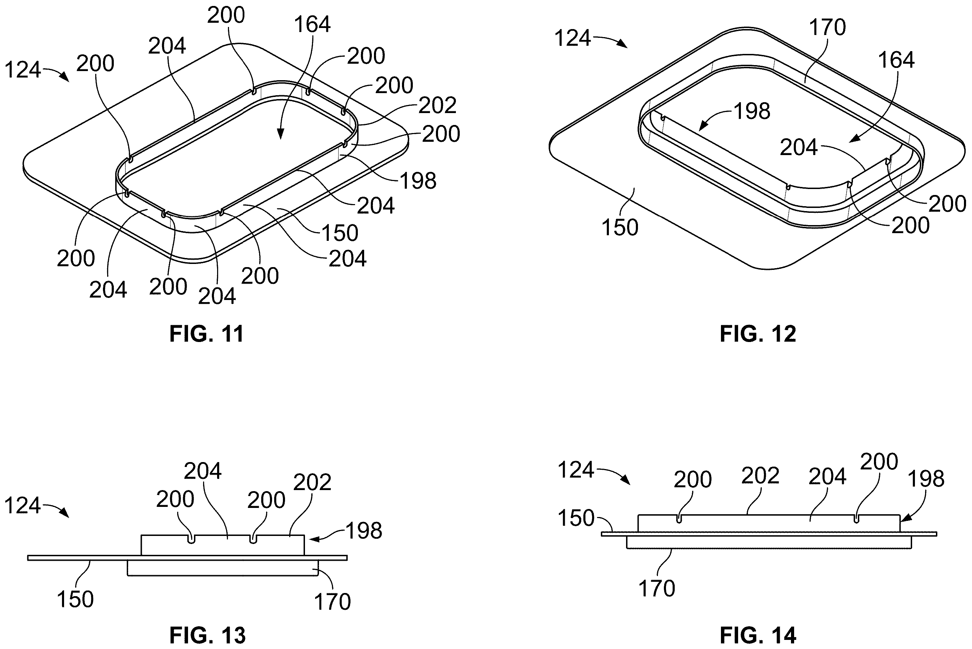

Figure 11 illustrates an isometric top view of the barrier 124, according to an example of the present disclosure. Figure 12 illustrates an isometric bottom view of the barrier 124 of Figure 11. Figure 13 illustrates an end view of the barrier 124 of Figure 11. Figure 14 illustrates a lateral view of the barrier 124 of Figure 11. Referring to Figures 11-14, the barrier 124 is similar to the barrier 124 shown in Figures 4-7. In at least one example, the barrier 124 shown in Figures 11-14 includes a liquid blocker, such as a deflectable rim 198 having slits 200 formed from a top edge 202 and extending toward, but not connecting to, the base 150. Hinges 204 are formed between neighboring slits 200. The slits 200 allow the hinges 204 to deflect, to allow the deflectable rim 198 to resiliently deflect if an object, such as a base floor of a lavatory, is moved thereon. The deflectable rim 198 in an at-rest position, as shown in Figures 11-14, provides a dam that prevents water from flowing into the passage 164. In at least one example, each hinge 204 is a living hinge having one or more portions of the deflectable rim 198 with slits 200. For example, the living hinge is formed from one or both of the slits 200 and/or reduced cross-sectional areas of the rim 198.

In at least one example, the liquid blocker includes the bead 166 (shown in Figure 4, for example) and the deflectable rim 198. For example, the bead 166 can be integrally coupled to the deflectable rim 198 As a further example, the bead 166 can extend from a top of the rim 198, or the rim 198 can extend from a top of the bead 166. As another example, the deflectable rim 198 can be inboard from the bead 166, or vice versa.

Referring to Figures 1-14, the barrier 124 can be used in relation to an opening in the main floor and an opening in a monument, such as a lavatory, galley, closet, or the like.

The barriers 124 described herein provide a fluid-tight barrier having a sealing surface, such as the base 150, configured to be bonded to the main floor 128 of the internal cabin 122. Flexible liquid blockers, such as the bead 166 and the deflectable rim 198, are configured to deflect downwardly as a portion of a monument (such as the base floor 132 of the lavatory 100) is slid thereover, and flex back to an at-rest position after the portion is no longer disposed thereon. The barriers 124 provide a sealing ring surrounding the opening 126 of the main floor 128. The barriers 124 provide water management, such as via the bead 166 and the deflectable rim 198, while the lip 170 provides a protective edge treatment for the internal edges of the main floor 128, which define the opening 126.

The barriers 124 can be integrally molded and formed a single piece of material, such as including silicone, rubber, or the like. Optionally, the barriers 124 can include a secondary piece, such as an adapter plate formed of plastic, which can be over-molded onto a portion of the base 150, for example.

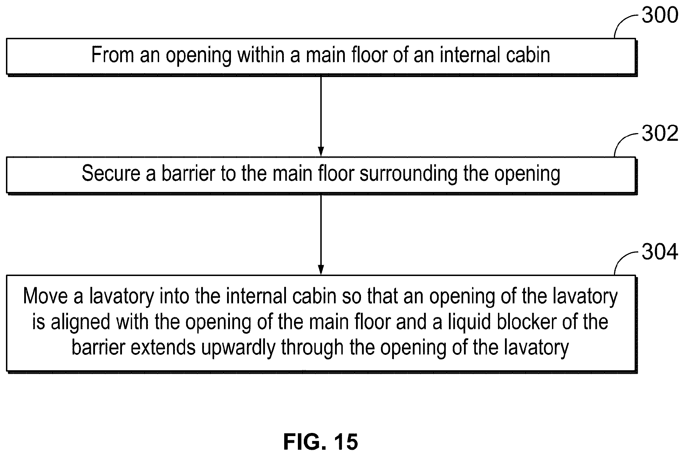

Figure 15 illustrates a flow chart of a method, according to an example of the present disclosure. Referring to Figures 1-15, at 300, the opening 126 is formed within the main floor 128 of the internal cabin 122. At 302, the barrier 124 is secured to the main floor 128 surrounding the opening 126. The lip 170 of the barrier 124 is bonded to edges of the main floor 128 defining the opening 126, and the base 150 overlays the top surface 180 of the main floor 128 surrounding the opening 126. At 304, the lavatory 100 is moved into the internal cabin 122 so that the opening 130 of the base floor 132 of the lavatory 100 is aligned with the opening 126 of the main floor 128, and the liquid blocker (such as the bead 166 or the deflectable rim 198) of the barrier 124 extends upwardly through the opening of the lavatory 100.

Optionally, a protective cover can be disposed on and/or otherwise over the barrier 124 prior to movement of the lavatory 100 into the internal cabin 122. For example, protective cover is removable. In at least one example, the protective cover is, or otherwise includes a thin sheet of material. The protective cover is used when moving a monument, such as the lavatory 100, into position within the internal cabin 122. The monument can be lightly lifted, and the protective cover removed, after which the monument is secured to the floor.

Further, the disclosure comprises examples according to the following clauses:
Clause 1. A system configured to provide an interface between a main floor of an internal cabin of and a lavatory secured to the main floor, the system comprising:
   a barrier comprising:
   a base having a first surface and a second surface opposite from the first surface, wherein a passage is formed through the base between and through the first surface and the second surface;
   a lip extending from the second surface, wherein the lip is configured to couple to edges of the main floor that define a first opening formed in the main floor; and
   a liquid blocker extending from the first surface around the passage, wherein the liquid blocker is configured to extend into a second opening formed in a base floor of the lavatory.
Clause 2. The system of Clause 1, wherein the first opening is configured to be aligned with the second opening, and wherein one or more fluid conduits of the lavatory are configured to extend into and through the first opening and the second opening.
Clause 3. The system of Clause 2, wherein the second opening is under a junction box within a cabinet of the lavatory.
Clause 4. The system of any of Clauses 1-3, wherein the barrier is integrally molded and formed as a single piece of flexible, sealing material.
Clause 5. The system of Clause 4, wherein the flexible, sealing material comprises silicone.
Clause 6. The system of any of Clauses 1-5, wherein the liquid blocker comprises a bead.
Clause 7. The system of Clause 6, wherein the bead comprises:
   a root upwardly and inwardly extending from the base; and
   a stem connected to the root, wherein the stem is arcuate, and upwardly and inwardly extends to an exposed edge.
Clause 8. The system of any of Clauses 1-7, wherein the liquid blocker contiguously extends from and around a perimeter edge of the passage.
Clause 9. The system of any of Clauses 1-8, wherein the base comprises an expanded area between the passage and one side of the base.
Clause 10. The system of any of Clauses 1-9, wherein one or more portions of the base of the barrier are configured to be sandwiched between the base floor of the lavatory and the main floor of the internal cabin.
Clause 11. The system of any of Clauses 1-10, wherein the liquid blocker comprises a living hinge having a deflectable rim with slits, wherein the living hinge is formed from one or both of slits or reduced cross-sectional areas.
Clause 12. An aircraft comprising:
   an internal cabin having a main floor, wherein a first opening is formed through the main floor;
   a lavatory having a base floor secured to the main floor, wherein a second opening is formed through the base floor; and
   a system that provides an interface between the main floor of the internal cabin and the lavatory secured to the main floor, the system comprising:
      a barrier comprising:
      a base having a first surface and a second surface opposite from the first surface, wherein a passage is formed through the base between and through the first surface and the second surface, and wherein one or more portions of the base of the barrier are sandwiched between the base floor of the lavatory and the main floor of the internal cabin;
      a lip extending from the second surface, wherein the lip coupled to edges of the main floor that define the first opening formed in the main floor; and
      a liquid blocker extending from the first surface around the passage, wherein the liquid blocker extends into the second opening formed in the base floor of the lavatory.
Clause 13. The aircraft of Clause 12, wherein the first opening aligned with the second opening, and wherein one or more fluid conduits of the lavatory extend into and through the first opening and the second opening.
Clause 14. The aircraft of Clause 13, wherein the second opening is under a junction box within a cabinet of the lavatory.
Clause 15. The aircraft of any of Clauses 12-14, wherein the barrier is integrally molded and formed as a single piece of flexible, sealing material comprising silicone.
Clause 16. The aircraft of Clause 15, wherein the liquid blocker comprises a bead including:
   a root upwardly and inwardly extending from the base; and
   a stem connected to the root, wherein the stem is arcuate, and upwardly and inwardly extends to an exposed edge.
Clause 17. The aircraft of any of Clauses 12-16, wherein the liquid blocker contiguously extends from and around a perimeter edge of the passage.
Clause 18. The aircraft of any of Clauses 12-17, wherein the base comprises an expanded area between the passage and one side of the base.
Clause 19. The aircraft of any of Clauses 12-18, wherein the liquid blocker comprises a deflectable rim having slits, wherein hinges are formed between the slits.
Clause 20. A method for a system configured to provide an interface between a main floor of an internal cabin of and a lavatory secured to the main floor, the system comprising:
   a barrier comprising:
      a base having a first surface and a second surface opposite from the first surface, wherein a passage is formed through the base between and through the first surface and the second surface;
      a lip extending from the second surface, wherein the lip is configured to couple to edges of the main floor that define a first opening formed in the main floor; and
      a liquid blocker extending from the first surface around the passage, wherein the liquid blocker is configured to extend into a second opening formed in a base floor of the lavatory,
   the method comprising:
      coupling the lip to edges of the main floor that define the first opening formed in the main floor; and
      extending the liquid blocker into the second opening formed in the base floor of the lavatory.

As described herein, examples of the present disclosure provide systems and methods for effectively and efficiently providing a seal between a lavatory and a floor of an internal cabin of an aircraft. Further, examples of the present disclosure provide an interface between the floor and the lavatory proximate to openings therebetween.

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system (120) configured to provide an interface between a main floor (128) of an internal cabin (122) of and a lavatory (100) secured to the main floor (128), the system (120) comprising:
a barrier (124) comprising:
a base (150) having a first surface (152) and a second surface (154) opposite from the first surface (152), wherein a passage (164) is formed through the base (150) between and through the first surface (152) and the second surface (154);
a lip (170) extending from the second surface (154), wherein the lip (170) is configured to couple to edges of the main floor (128) that define a first opening (126, 130) formed in the main floor (128); and
a liquid blocker extending from the first surface (152) around the passage (164), wherein the liquid blocker is configured to extend into a second opening (126, 130) formed in a base floor (101, 132) of the lavatory (100).

2. The system (120) of claim 1, wherein the first opening (126, 130) is configured to be aligned with the second opening (126, 130), and wherein one or more fluid conduits (136,138,140) of the lavatory (100) are configured to extend into and through the first opening (126, 130) and the second opening (126, 130).

3. The system (120) of claim 2, wherein the second opening (126, 130) is under a junction box (142) within a cabinet of the lavatory (100).

4. The system (120) of any one of claims 1 to 3, wherein the barrier (124) is integrally molded and formed as a single piece of flexible, sealing material.

5. The system (120) of claim 4, wherein the flexible, sealing material comprises silicone.

6. The system (120) of any one of claims 1 to 5, wherein the liquid blocker comprises a bead (166).

7. The system (120) of claim 6, wherein the bead (166) comprises:
a root (190) upwardly and inwardly extending from the base (150);
a stem (192) connected to the root (190), wherein the stem (192) is arcuate, and upwardly and inwardly extends to an exposed edge (194).

8. The system (120) of any one of claims 1 to 7, wherein the liquid blocker contiguously extends from and around a perimeter edge of the passage (164).

9. The system (120) of any one of claims 1 to 8, wherein the base (150) comprises an expanded area (174) between the passage (164) and one side of the base (150).

10. The system (120) of any one of claims 1 to 9, wherein one or more portions of the base (150) of the barrier (124) are configured to be sandwiched between the base floor (101, 132) of the lavatory (100) and the main floor (128) of the internal cabin (122).

11. The system (120) of any one of claims 1 to 10, wherein the liquid blocker comprises a living hinge (204) having a deflectable rim (198) with slits (200), wherein the living hinge (204) is formed from one or both of slits (200) or reduced cross-sectional areas.

12. An aircraft comprising:
an internal cabin (122) having a main floor (128), wherein a first opening (126, 130) is formed through the main floor (128);
a lavatory (100) having a base floor (101, 132) secured to the main floor (128), wherein a second opening (126, 130) is formed through the base floor (101, 132); and
the system (120) according to any one of claims 1 to 11.

13. A method for a system (120) according to any one of claims 1 to 11 configured to provide an interface between a main floor (128) of an internal cabin (122) of and a lavatory (100) secured to the main floor (128),
the method comprising:
coupling the lip (170) to edges of the main floor (128) that define the first opening (126, 130) formed in the main floor (128); and
extending the liquid blocker into the second opening (126, 130) formed in the base floor (101, 132) of the lavatory (100).

14. The method of claim 13, further comprising an initial step of forming the first opening (126) within the main floor (128) of the internal cabin (122).

15. The method of claim 13 or 14, further comprising moving the lavatory (100) into the internal cabin (122) so that the second opening (130) of the base floor (132) of the lavatory (100) is aligned with the first opening (126) of the main floor (128), an optionally, disposing a protective cover over the barrier (124) prior to movement of the lavatory (100) into the internal cabin (122).
